# EUROPEAN PATENT APPLICATION

(11) **EP 4 542 730 A1**
(43) Date of publication of application: **23.04.2025**
(21) Application number: 24204514.4
(22) Date of filing: 03.10.2024
(51) Int. Cl.: H01M 10/613, H01M 10/6567, H01M 10/658, H01M 50/204, H01M 50/233, H01M 10/6556

(54) **BATTERY PACK AND EXTINGUISHING METHOD THEREOF**

(30) Priority: 18.10.2023 KR 20230139854
(71) Applicant: SAMSUNG SDI CO., LTD., Giheung-gu Yongin-si, Gyeonggi-do 17084 (KR)
(72) Inventor: CHO, Jaeyong, 17084 Yongin-si (KR)
(74) Representative: Marks & Clerk LLP

(57) **Abstract**

A battery pack includes a battery housing having a battery cell accommodating space portion accommodating a plurality of battery cells, a lower space portion under the battery cell accommodating space portion, and a battery cell base portion between the lower space portion and the battery cell accommodating space portion and supporting the plurality of battery cells. The battery cell base portion includes: a base melting portion configured to melt if an adjacent one of the battery cells is heated to a reference temperature or greater; and a base non-melting portion configured to not melt if the adjacent one of the battery cells is heated to the reference temperature or greater.

## Description

### BACKGROUND

### 1. Field

Aspects of embodiments of the present disclosure relate to a battery pack including an extinguishing system and an extinguishing method of the battery pack.

### 2. Description of the Related Art

Generally, a secondary battery refers to a battery that is designed to be chargeable and dischargeable, different from a primary battery that is not designed to be chargeable. Secondary batteries are used as energy sources for mobile devices, electric vehicles, hybrid vehicles, electric bicycles, uninterruptible power supplies, etc.. Secondary batteries may be used in the form of a single battery or in the form of a pack in which multiple battery cells are connected and grouped into one unit according to the type of external device to which they are applied.

Small mobile devices, such as mobile phones, may operate for a certain amount of time based on the output and capacity of a single battery, but for devices requiring long-term driving and high-power operation, such as electric vehicles, hybrid vehicles, etc., and which consume a lot of power, a pack-type secondary battery including a plurality of batteries is often used to provide sufficient output and capacity. The output voltage or output current may be increased by increasing the number of included batteries.

An immersion scheme is a type of extinguishing system for preventing thermal runaway occurring in battery cells. The immersion scheme refers to a system for extinguishing thermal runaway by immersing a battery cell in an extinguishing liquid.

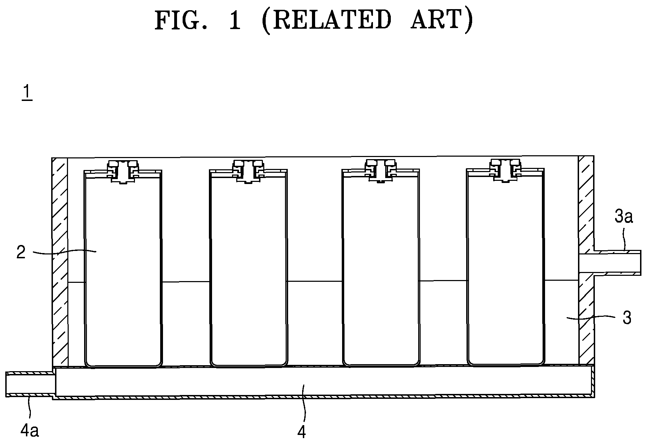

A general battery pack including an extinguishing system is shown in FIG. 1. Referring to FIG. 1, in the general battery pack including the extinguishing system, a pipe 4a, into which a coolant 4 flows for water cooling is arranged in a water cooling system of the battery pack, and a pipe 3a, into which an extinguishing liquid 3 flows, is separately arranged in the extinguishing system of the battery pack.

To separately configure the water cooling system and the extinguishing system, the coolant 4 for water cooling and the extinguishing liquid 3 for extinguishment as well as the pipe 4a into which the coolant 4 flows for water cooling and the pipe 3a into which the extinguishing liquid 3 flows, must be separately provided, complicating the internal structure of the battery pack.

Further, when the water cooling system and the extinguishing system are separately configured (or separately provided), the volume of the extinguishing system and the weight of the battery pack may increase, and thus, the energy density of the battery pack may decrease.

### SUMMARY

Embodiments of the present disclosure include a battery pack including a plurality of battery cells in which extinguishment in case of thermal runaway of a battery cell may be efficiently performed through a compact structure.

However, these aspect and features of the present disclosure are merely examples, and the aspects and features of the present disclosure are not limited thereto.

Additional aspects and features will be set forth, in part, in the description which follows and, in part, will be apparent from the description or may be learned by practice of the described embodiments of the present disclosure.

According to an embodiment of the present disclosure, a battery pack includes a battery housing accommodating a plurality of battery cells and has a battery cell accommodating space portion in which the plurality of battery cells are accommodated, a lower space portion under the battery cell accommodating space portion, and a battery cell base portion between the lower space portion and the battery cell accommodating space portion and supporting the plurality of battery cells. The battery cell base portion includes a base melting portion configured to melt if an adjacent one of the battery cells is heated to a reference temperature or greater, and a base non-melting portion configured to not melt if the adjacent one of the battery cells is heated to the reference temperature or greater.

The base non-melting portion may include a first base non-melting portion contacting a bottom portion of each of the plurality of battery cells, and a second base non-melting portion spaced apart from each of the plurality of battery cells and being between the first base non-melting portions and the second non-melting portion. In some embodiments, the base non-melting portion may include a plurality of first base non-melting portions contacting a bottom portion of each of the plurality of battery cells, respectively,

A thickness (or height) of the base melting portion adjacent to the first base non-melting portion may be less than a thickness (or height) of the base melting portion adjacent to the second base non-melting portion.

An end portion of the first base non-melting portions may be aligned with an end point of a rounded corner of the bottom portion of each of the plurality of battery cells.

The base melting portion may have a first melting portion width part corresponding to a short width portion of each of the plurality of battery cells on the base non-melting portion and a second melting portion width corresponding to a long width portion of each of the plurality of battery cells on the base non-melting portion. The first melting portion width and the second melting portion width may be variable.

According to an embodiment of the present disclosure, an extinguishing method of a battery pack includes: a base melting portion adjacent to a battery cell undergoing a thermal runaway melting; and coolant flowing into a battery cell accommodating space portion from a lower space portion through an opening where the base melting portion used to be located to immerse the battery cell in the coolant.

The battery pack may be as defined above or below.

At least some of the above and other features of the invention are set out in the claims.

Other aspects and features of the present disclosure than described above will become apparent from the detailed description, claims, and drawings of the present disclosure, which are provided below.

### BRIEF DESCRIPTION OF THE DRAWINGS

The above and other aspects and features of embodiments of the present disclosure will be more apparent from the following description taken in conjunction with the accompanying drawings, in which:
FIG. 1 is a cross-sectional view of a general battery pack including an extinguishing system;
FIG. 2 is a perspective view of a battery pack according to embodiments of the present disclosure;
FIG. 3 is a cross-sectional view taken along the line A-A' in FIG. 2 of the battery pack in a state of the battery pack before thermal runaway according to embodiments of the present disclosure;
FIG. 4 is an enlarged view of the portion C in FIG. 3;
FIG. 5 is a cross-sectional view taken along the line A-A' in FIG. 2 of the battery pack in a state in which thermal runaway occurs according to the embodiments of the present disclosure;
FIG. 6 is a cross-sectional view taken along the line A-A' in FIG. 2 of the battery pack in a state in which a base non-melting portion melts and a battery cell accommodating space portion is filled with a coolant through a melting portion of the base non-melting portion such that the battery cell is immersed in the coolant;
FIG. 7 is a plan view of the battery pack shown in FIG. 2 viewed in the direction B of FIG. 2 in which the battery cells are removed from the battery pack;
FIG. 8 is a plan view of the battery pack shown in FIG. 2 viewed in the direction B of FIG. 2;
FIG. 9 is an enlarged view of the portion D in FIG. 4 showing a battery pack according to other embodiments of the present disclosure; and
FIG. 10 is a flowchart describing an extinguishing method of a battery pack according to embodiments of the present disclosure.

### DETAILED DESCRIPTION

Reference will now be made in detail to embodiments, examples of which are illustrated in the accompanying drawings. In this regard, the described embodiments may have different forms and should not be construed as being limited to the descriptions set forth herein. Accordingly, embodiments of the present disclosure are described below, by referring to the figures, to explain aspects and features of the present description.

The present disclosure may have various modifications thereto and various embodiments, and thus, embodiments will be illustrated in the drawings and described in detail. It should be understood, however, that this is not intended to limit the present disclosure to a particular embodiment or embodiments, and the present disclosure should be understood to include all changes, equivalents, and alternatives falling within the scope of the present disclosure.

If certain embodiments may be implemented otherwise, a particular process order may be performed differently from the order described. For example, two processes described in succession may be performed concurrently or substantially simultaneously or may be performed in an order reverse to the order described.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

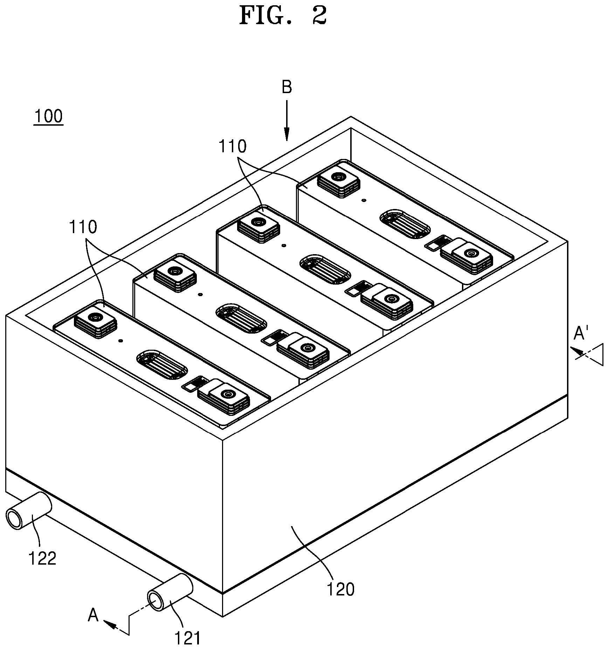

Hereinbelow, a battery pack according to embodiments of the present disclosure will be described with reference to FIGS. 2 to 4.

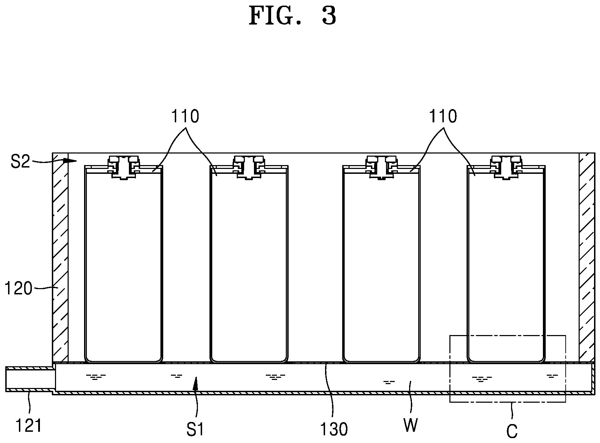

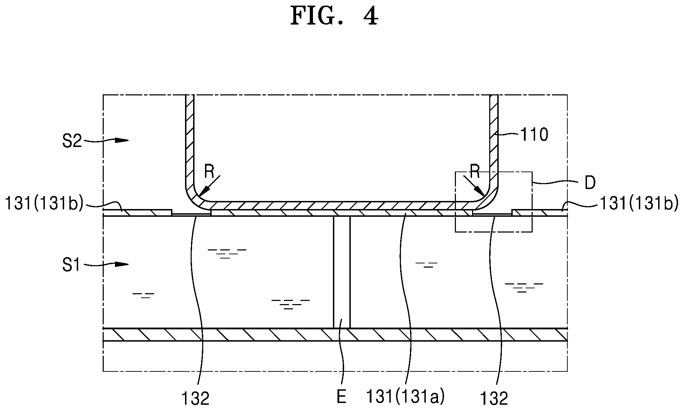

FIG. 2 is a perspective view of a battery pack according to embodiments of the present disclosure. FIG. 3 is a cross-sectional view of the battery pack taken along the line A-A' in FIG. 2 showing the battery pack in a state before thermal runaway according to embodiments of the present disclosure. FIG. 4 is an enlarged view of the portion C in FIG. 3.

Referring to FIGS. 2 to 4, a battery pack 100 according to embodiments of the present disclosure may include a battery housing 120 accommodating a plurality of battery cells 110, a battery cell accommodating space portion S2 in which the plurality of battery cells 110 are accommodated within the battery housing 120, a lower space portion S1 arranged under the battery cell accommodating space portion S2 within the battery housing 120, and a battery cell base portion 130 formed between (e.g., separating) the lower space portion S1 and the battery cell accommodating space portion S2 and supporting the plurality of battery cells 110. The battery cell base portion 130 may include a base melting portion 132 that melts if heated to a reference temperature or greater from heat generated in a battery cell and a base non-melting portion 131 that does not melt if heated to the reference temperature or greater.

The plurality of battery cells 110 may be accommodated inside the battery housing 120. Referring to the illustrated embodiment, each battery cell 110 may be a prismatic battery cell, but in other embodiments, each battery cell 110 may be a cylindrical battery cell or a pouch-type battery cell. In other words, the type of the battery cell is not limited in the present disclosure.

Referring to the illustrated embodiment, the battery housing 120 may include the battery cell accommodating space portion S2 in which the plurality of battery cells 110 are accommodated and the lower space portion S1 in which a coolant is accommodated. The lower space portion S1 may be arranged under the battery cell accommodating space portion S2 and may accommodate a coolant W, such that the coolant W accommodated in the lower space portion S1 may cool (e.g., may remove) heat generated during charge/discharge cycles of the battery pack 100 to adjust a temperature of the battery pack 100.

The coolant W accommodated in the lower space portion S1 may be circulated by being supplied to the lower space portion S1 through an inlet 121 and discharged outside through an outlet 122.

The battery cell base portion 130 may be arranged in the form of a plate between the lower space portion S1 and the battery cell accommodating space portion S2 to separate the lower space portion S1 from the battery cell accommodating space portion S2. The battery cell base portion 130 may support the plurality of battery cells 110 arranged in the battery cell accommodating space portion S2. A part of the battery cell base portion 130 may be arranged to contact bottom portions of the plurality of battery cells 110.

Referring to the illustrated embodiment, the battery cell base portion 130 may include the base non-melting portion 131 and the base melting portion 132. The base non-melting portion 131 may not melt if heated to a reference temperature or greater from heat generated in any of the battery cells 110, but the base melting portion 132 may melt if heated to the reference temperature or greater from heat generated in the battery cell 110. That is, the base melting portion 132 and the base non-melting portion 131 may be formed of different materials.

The base non-melting portion 131 may be formed of a material having a greater thermal resistance than that of the base melting portion 132. The base non-melting portion 131 may include a material having relatively high thermal resistance sufficient to withstand high-temperature heat and, thus, to maintain its shape without being deformed even if thermal runaway of a battery cell 110 occurs.

The material of the base melting portion 132 may have a lower melting point than the reference temperature. The material of the base non-melting portion 131 may have a higher melting point than the reference temperature.

If an internal temperature of a battery cell 110 increases due to an abnormal operating condition of the battery cell 110, an abnormal reaction may occur in the battery cell 110. As an example of an abnormal operating condition, thermal runaway of the battery cell may occur due to over-heating of the battery cell 110 or overcharging the battery cell 110, which may cause a fire. As such, the battery pack 100 may include an extinguishing system configured to extinguishing the fire.

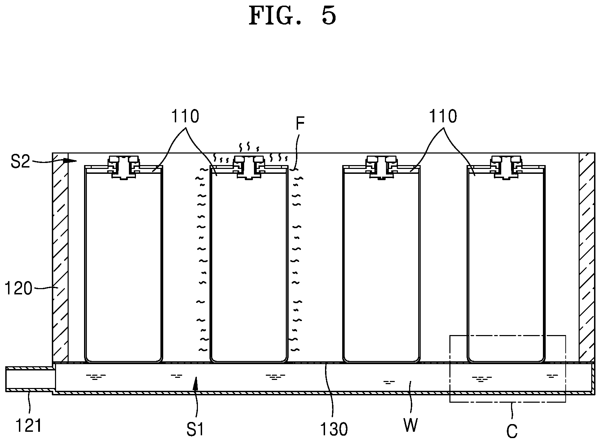

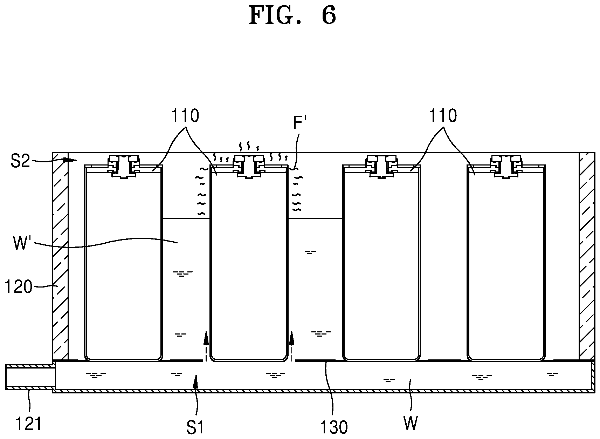

Referring to the illustrated embodiment, as shown in FIG. 5, if thermal runaway of the battery cell 110 occurs, a temperature around the battery cell 110 may increase due to the thermal runaway of the battery cell 110, and the base melting portion 132 may melt due to the corresponding increased temperature, as shown in FIG. 6. If the base melting portion 132 melts, the coolant W supplied to the lower space portion S1 may flow into the battery cell accommodating space portion S2 through a part (e.g., an area) at where the base melting portion 132 is located before melting (e.g., through an opening formed by the base melting portion 132 having melted). A coolant W flowing into the battery cell accommodating space portion S2 may gradually rise due to coolant supply such that the battery cell 110 experiencing the thermal runaway may be immersed in the coolant W'. By immersing the battery cell 110 in the coolant W', the thermal runaway occurring in the battery cell 110 may be controlled and fire in the battery pack 100 may be extinguished.

The battery pack 100, according to embodiments of the present disclosure, may include one system in which the water cooling system and the extinguishing system are integrated. The base melting portion 132 of the battery cell base portion 130 may be configured to melt when exposed to high-temperature heat in the case of thermal runaway of the battery cell 110, and when the base melting portion 132 melts, the lower space portion S1 and the battery cell accommodating space portion S2 may be connected to (e.g., may be in fluid communication with) each other. As the battery cell accommodating space portion S2 at where the battery cells 110 are located is filled with the coolant W from the lower space portion S1, the battery cell 110 may be immersed to extinguish a fire in the battery pack.

In a normal state, an overall temperature of the battery pack may be controlled by using the water cooling system in the lower space portion S1 of the battery pack and the coolant W filled in the lower space portion S1, and in an emergency state, such as occurrence of thermal runaway of a battery cell 110, the coolant W from the water cooling system may naturally flow around the battery cell 110 without a separate power source due to the high-temperature heat allowing the battery cell 110 to be immersed in the coolant W, thereby using the water cooling system for the extinguishing function in case of emergency.

Hence, internal components of the battery pack 100 may be (or may remain) compact, and the number of components arranged inside the battery pack 100 may be reduced, thereby reducing the volume and weight of the components and improving the energy density of the battery pack 100 overall.

Hereinbelow, with reference to FIGS. 3, 5, 6, and 10, an extinguishing method of a battery pack according to embodiments of the present disclosure will be described.

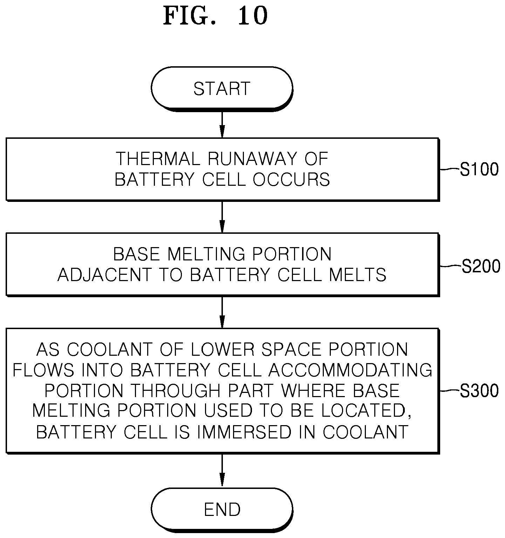

FIG. 3 is a cross-sectional view of the battery pack taken along the line A-A' in FIG. 2 showing a state of the battery pack before thermal runaway according to embodiments of the present disclosure; FIG. 5 is a cross-sectional view of the battery pack taken along the line A-A' in FIG. 2 showing a state of the battery pack in which thermal runaway occurs according to embodiments of the present disclosure. FIG. 6 is a cross-sectional view of the battery pack taken along the line A-A' in FIG. 2 showing a state in which a base melting portion melts and a battery cell accommodating space portion is filled with a coolant through a melting portion of the base melting portion such that the battery cell is immersed in the coolant. FIG. 10 is a flowchart describing an extinguishing method of a battery pack according to embodiments of the present disclosure.

The extinguishing method of the battery pack according to embodiments of the present disclosure may include operation S100 in which thermal runaway F of the battery cell 110 occurs, as shown in FIG. 5, operation S200 in which the base melting portion 132 adjacent to the battery cell 110 melts, as shown in FIG. 6, and operation S300 in which the coolant W from the lower space portion S1 flows into the battery cell accommodating space portion S2 through a part where the base melting portion 132 used to be located to immerse the battery cell 110 in the coolant W'.

Hereinafter, with reference to FIGS. 4, 7, and 8, a structure of a battery cell base portion of a battery pack according to embodiments of the present disclosure will be described in more detail.

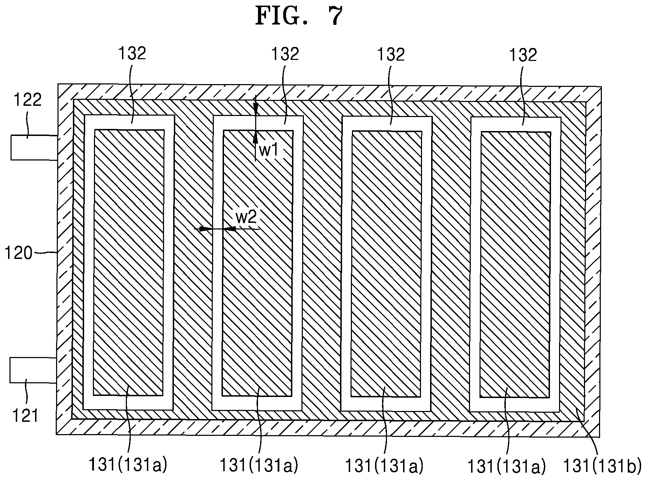

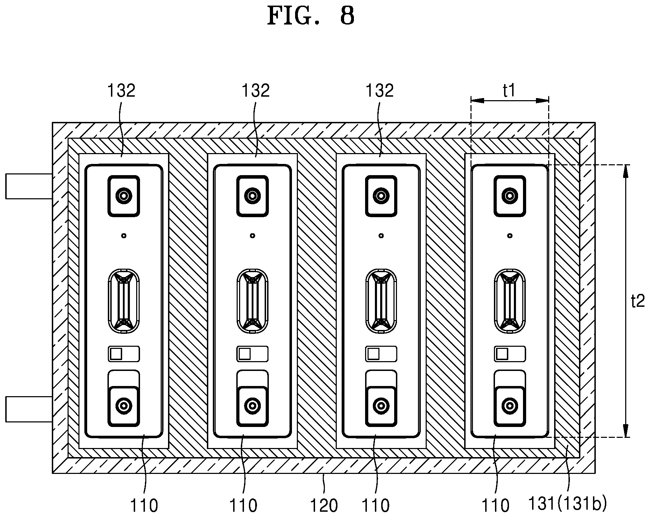

FIG. 4 is an enlarged view of the portion C in FIG. 3. FIG. 7 is a plan view of the battery pack viewed in the direction B in FIG. 2 in which the battery cells are removed from the battery pack. FIG. 8 is a plan view of the battery pack viewed in the direction B in FIG. 2.

Referring to FIGS. 4, 7, and 8, the battery cell base portion 130, according to embodiments of the present disclosure, may include the base non-melting portion 131 and the base melting portion 132. The base non-melting portion 131 may include a first base non-melting portion 131a contacting a bottom portion of the battery cell 110 and a second base non-melting portion 131b spaced apart from the battery cell 110. The base melting portion 132 may be arranged between the first base non-melting portion 131a and the second base non-melting portion 131b.

The first base non-melting portion 131a may have a shape corresponding to the bottom portion of the battery cell 110 to support the battery cell 110 and may be arranged in a position contacting the bottom portion of the battery cell 110. For example, the first base non-melting portion 131a may be connected to a support column E to safely support the battery cell 110 on the battery cell accommodating space portion S2.

An end portion (e.g., an edge) of the first base non-melting portion 131a may be formed at an end point of a rounded corner R of the bottom portion of the battery cell 110. If thermal runaway occurs in the battery cell 110, the coolant W in the lower space portion S1 may quickly enter the battery cell accommodating space portion S2 by flowing along the rounded corner R of the bottom portion of the battery cell 110.

The second base non-melting portion 131b may be arranged in a part of the base non-melting portion 131 which does not contact the bottom portion of the battery cell 110. In the normal state when thermal runaway does not occur, the second base non-melting portion 131b, together with the base melting portion 132 and the first base non-melting portion 131a, may separate the lower space portion S1 and the battery cell accommodating space portion S2 to prevent the coolant W in the lower space portion S1 from entering into the battery cell accommodating space portion S2.

The base melting portion 132 may be arranged between the first base non-melting portion 131a and the second base non-melting portion 131b, as shown in FIG. 7. The base melting portion 132 may be formed in a circumferential direction around the first base non-melting portion 131a, which is formed in a shape corresponding to the bottom portion of the battery cell 110. The base melting portion 132 may be formed to extend along a circumference of the battery cell 110, which is adjacent thereto, such that the base melting portion 132 may be receive heat from a thermal runaway and at the same time, may allow the coolant W to first enter an outer surface of the battery cell 110, which may have a greater temperature than the other spaces of the battery pack 100.

Referring to FIGS. 7 and 8, the base melting portion 132 may have a first melting portion width w1, which is a width of a portion of the base melting portion 132 corresponding to a short width portion t1 of the battery cell 110 placed on the base non-melting portion 131, and a second melting portion width w2, which is a width of a portion of the base melting portion 132 corresponding to a long width portion t2 of the battery cell 110 placed on the base non-melting portion 131. The melting portion first width w1 and the melting portion second width w2 may be suitably varied.

According to the battery cell 110 (e.g., according to the specifications or characteristics thereof), thermal runaway may be localized in one of the short width t1 side and the long width t2 side more than in the other one of the short width t1 side and the long width t2. Thus, a side where thermal runaway is more likely to occur (or is more likely to be localized) may be determined in advance based on the internal structure of the battery cell 110, and a melting portion width of the side at where thermal runaway is likely to occur more intensely may be wider than that of the other. Thus, in the case of thermal runaway of the battery cell 110, the coolant may be filled more quickly in one of the short width part and the long width part at where the thermal runaway occurs more intensely, thereby more rapidly extinguishing any fire.

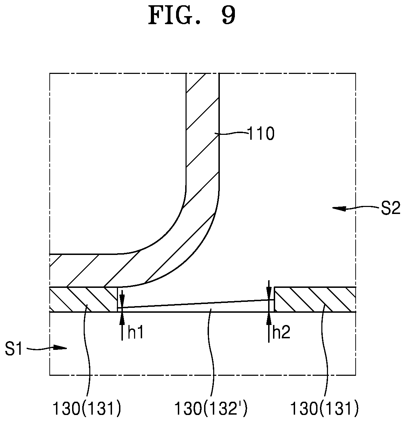

Hereinbelow, a battery pack according to other embodiments of the present disclosure will be described with reference to FIG. 9.

FIG. 9 is an enlarged view of the portion D in FIG. 4 showing a battery pack according to other embodiments of the present disclosure.

Referring to FIG. 9, in the base melting portion 132', a height (or thickness) h1 of a part adjacent to the first base non-melting portion 131a may be less than a height (or thickness) h2 of a part adjacent to the second base non-melting portion 131b.

From among parts of the base melting portion 132, the height of the base melting portion 132 may decrease toward a part closer to the battery cell 110 such that, in the case of thermal runaway of the battery cell 110, the part of the base melting portion 132 adjacent to the battery cell 110 may melt first, causing the coolant W to be introduced first to the part relatively close to the battery cell 110.

The present disclosure has been described with reference to embodiments, which are shown in the drawings, but these are merely examples. It would be fully understood by those of ordinary skill in the art that various modifications and other equivalent embodiments are possible. Therefore, the technical scope of the present disclosure should be defined by the appended claims and their equivalents.

Specific technical details described herein with reference to the embodiments are examples and do not limit the technical scope of the embodiments or of the present disclosure. To briefly and clearly describe aspects and features of the present disclosure, the description of conventional general techniques and configurations may have been omitted or only briefly described.

Connections of lines or connection members between components shown in the drawings are illustrative of functional connections and/or physical or circuit connections, and in practice, may be expressed as alternative or additional various functional connections, physical connections, or circuit connections. In addition, when there is no specific mentioning, such as "essential" or "important", it may not be a necessary component for the application of the present disclosure.

A designator "a", "the", or similar designators used in the description and the claims may refer to both singular and plural, unless otherwise specifically limited. In addition, when a range is described in the embodiments, the range includes the present disclosure to which an individual value falling within the range is applied (unless stated otherwise) and is the same as the description of an individual value constituting the range in the description of the present disclosure.

When there is no apparent description of the order of operations constituting the method according to the embodiments or a contrary description thereof, the operations may be performed in an appropriate order.

However, the present disclosure is not limited to the described order of operations. The use of all examples or exemplary terms (for example, etc.) in the present disclosure are to simply describe the present disclosure in detail, and unless the range of the present disclosure is not limited by the examples or the exemplary terms unless limited by the claims.

In addition, it may be understood by those of ordinary skill in the art that various modifications, combinations, and changes may be made according to design conditions and factors within the scope of the appended claims and equivalents thereof.

The battery pack and the extinguishing method thereof, according to embodiments of the present disclosure, may include one system in which the water cooling system and the extinguishing system are integrated. The base melting portion of the battery cell base portion may be formed to melt in case of thermal runaway of the battery cell, and when the base melting portion melts due to the thermal runaway of the battery cell, the battery cell accommodating space portion where the battery cells are located may be filled with the coolant from the lower space portion to immerse the battery cell and to extinguish any fire in the battery pack 100.

By performing the extinguishing function of the battery pack by using the water cooling system of the battery pack in case of emergency, the internal components of the battery pack may remain compact and the number of components arranged inside the battery pack may be reduced, thereby reducing the volume and weight of the components and improving the energy density of the battery pack overall.

Aspects and features of the present disclosure are not limited to the aspects and features mentioned above, and other aspects and features not mentioned will be clearly understood by those of ordinary skill in the art from the detailed description and description of the claims.

It should be understood that embodiments described herein should be considered in a descriptive sense and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims and their equivalents.

## Claims

1. A battery pack comprising:
a battery housing accommodating a plurality of battery cells and having:
a battery cell accommodating space portion in which the plurality of battery cells are accommodated;
a lower space portion under the battery cell accommodating space portion; and
a battery cell base portion between the lower space portion and the battery cell accommodating space portion and supporting the plurality of battery cells,
wherein the battery cell base portion comprises:
a base melting portion configured to melt if an adjacent one of the battery cells is heated to a reference temperature or greater; and
a base non-melting portion configured to not melt if the adjacent one of the battery cells is heated to the reference temperature or greater.

2. The battery pack as claimed in claim 1, wherein the base non-melting portion comprises:
a plurality of first base non-melting portions respectively contacting a bottom portion of each of the plurality of battery cells; and
a second base non-melting portion spaced apart from each of the plurality of battery cells,
wherein the base melting portion is arranged between the first base non-melting portions and the second base non-melting portion.

3. The battery pack as claimed in claim 2, wherein a thickness of the base melting portion adjacent to the first base non-melting portion is less than a thickness of the base melting portion adjacent to the second base non-melting portion.

4. The battery pack as claimed in claim 2 or claim 3, wherein an end portion of each of the first base non-melting portions is aligned with a rounded corner of the bottom portion of each of the plurality of battery cells, respectively.

5. The battery pack as claimed in any one of the preceding claims, wherein the base melting portion has a first melting portion width at a part corresponding to a short width portion of each of the plurality of battery cells on the base non-melting portion and a second melting portion width at a part corresponding to a long width portion of each of the plurality of battery cells on the base non-melting portion, and
wherein the first melting portion width and the second melting portion width are variable.

6. An extinguishing method of a battery pack, the extinguishing method comprising:
a base melting portion adjacent to a battery cell melting in response to the battery cell undergoing thermal runaway; and
coolant flows into a battery cell accommodating space portion at where the battery cell is accommodated from a lower space portion through an opening formed where the base melting portion used to be located to immerse the battery cell in the coolant.

7. The method of claim 6, wherein the battery pack is in accordance with any one of claims 1 to 5.
